# EUROPEAN PATENT APPLICATION

(11) **EP 3 693 894 A1**
(43) Date of publication of application: **12.08.2020**
(21) Application number: 18872340.7
(22) Date of filing: 14.09.2018
(51) Int. Cl.: G06K 17/00

(54) **SERVICE PROCESS STARTING METHOD AND APPARATUS**

(30) Priority: 01.11.2017 CN 201711055749
(71) Applicant: Alibaba Group Holding Limited, Grand Cayman (KY)
(72) Inventor: PENG, Yujun, Zhejiang 311121 (CN)
(74) Representative: Goddar, Heinz J.
(86) International application number: PCT/CN2018/105728
(87) International publication number: WO 2019/085662

(57) **Abstract**

The present specification provides a service process starting method applied to a terminal device. The method comprises: scanning a barcode to obtain barcode information and obtain first function information of the barcode, the first function information being used for specifying a service function; sending, according to the barcode information, a service request message comprising the first function information to a server, so as to allow the server to determine second function information according to the first function information and determine service entry information according to a correspondence relationship between the second function information and the service entry information; and receiving the service entry information returned by the server, and starting a service process by using the service entry information, the service process having a service function specified by the first function information.

## Description

### TECHNICAL FIELD

The present specification relates to the field of network communication technologies, and in particular, to a method and apparatus for starting a service process.

### BACKGROUND

A barcode is a group of bars and spaces arranged according to some coding rules and is used for representing some information formed by characters, numbers and symbols. Barcodes comprise one-dimensional barcodes and two-dimensional barcodes, where a one-dimensional barcode represents information by multiple black bars and spaces arranged according to a rule, and a two-dimensional barcode (also referred to as a QR code) records information by a pattern in black and white with a particular geometric shape distributed on a plane (in two-dimensional directions) according to a rule.

With the development of mobile Internet technologies and smart terminal devices, people become increasingly used to complete various tasks in work and life by using networks. These tasks may be regarded as service performed based on networks. In the service performed in combination with an offline scenario, the approach through scanning a barcode has been extensively used to start a service process. However, to deploy barcodes in an offline scenario, the barcodes need to be generated, and barcode materials need to be printed and placed. How to reduce material and labor costs required by starting a service process is an issue to be considered in implementing the service process.

### SUMMARY

In view of the above, the present specification provides a method for starting a service process, applied to a terminal device. The method comprises:
scanning a barcode to obtain barcode information and obtain first function information of the barcode, the first function information being used for specifying a service function;
sending, according to the barcode information, a service request message comprising the first function information to a server, for the server to determine second function information according to the first function information and determine service entry information according to a correspondence relationship between the second function information and the service entry information; and
receiving the service entry information returned by the server, and starting a service process by using the service entry information, the service process having the service function specified by the first function information.
A method for starting a service process, provided by the present specification, is applied to a server, wherein the server maintains a correspondence relationship between second function information and service entry information, and the method comprises:
receiving a service request message comprising first function information sent from a terminal device, the first function information being used for specifying a service function;
determining second function information according to the first function information, and searching the correspondence relationship to obtain service entry information corresponding to the second function information; and
returning the service entry information to the terminal device, for the terminal device to start a service process by using the service entry information, the service process having the service function specified by the first function information.

The present specification further provides an apparatus for starting a service process, applied to a terminal device. The apparatus comprises:
a first function information obtaining unit configured to scan a barcode to obtain barcode information and obtain first function information of the barcode, the first function information being used for specifying a service function;
a service request sending unit configured to send, according to the barcode information, a service request message comprising the first function information to a server, for the server to determine second function information according to the first function information and determine service entry information according to a correspondence relationship between the second function information and the service entry information; and
a service entry information receiving unit configured to receive the service entry information returned by the server, and start a service process by using the service entry information, the service process having the service function specified by the first function information.

An apparatus for starting a service process, provided by the present specification, is applied to a server, wherein the server maintains a correspondence relationship between second function information and service entry information, and the apparatus comprises:
a service request message receiving unit configured to receive a service request message comprising first function information sent from a terminal device, the first function information being used for specifying a service function;
a second function information unit configured to determine second function information according to the first function information, and search the correspondence relationship to obtain service entry information corresponding to the second function information; and
a service entry information sending unit configured to return the service entry information to the terminal device, for the terminal device to start a service process by using the service entry information, the service process having the service function specified by the first function information.

A terminal device provided by the present specification comprises: a memory and a processor, wherein the memory stores a computer program executable by the processor, and when executing the computer program, the processor implements the steps of the above-described method for starting a service process, applied to a terminal device.

The present specification further provides a computer device, comprising: a memory and a processor, wherein the memory stores a computer program executable by the processor, and when executing the computer program, the processor implements the steps of the above-described method for starting a service process, applied to a server.

A computer readable storage medium provided by the present specification stores a computer program, and the computer program, when executed by a processor, implements the steps of the above-described method for starting a service process, applied to a terminal device.

The present specification further provides a computer readable storage medium, wherein the computer readable storage medium stores a computer program, and the computer program, when executed by a processor, implements the steps of the above-described method for starting a service process, applied to a server.

From the above-described technical solutions, it can be seen that, in embodiments of the present specification, the correspondence relationship between second function information and service entry information is maintained at a server; a terminal device scans a barcode to obtain first function information of the barcode and then uploads the first function information to the server; the server determines second function information according to the first function information and returns service entry information corresponding to the second function information to the terminal device; the terminal device starts a service process by using the service entry information, the service process having a specified service function. As a result, the same barcode can be used to start two or more service processes, which reduces material and labor costs required by barcode deployment; and a new service process can be started by introducing first function information and a correspondence relationship between second function information and service entry information, without the need of deploying a new barcode for the new service process, accelerating the launch of the new service.

### BRIEF DESCRIPTION OF THE DRAWINGS

FIG. 1 is a flow chart of a method for starting a service process, applied to a terminal device, according to some embodiments of the present specification;
FIG. 2 is a flow chart of a method for starting a service process, applied to a server, according to some embodiments of the present specification;
FIG. 3 is a schematic diagram of a QR code having copywriting in an application example of the present specification;
FIG. 4 is a schematic diagram of another QR code having copywriting in an application example of the present specification;
FIG. 5 is a hardware structural diagram of a terminal device or a device where a server is located;
FIG. 6 is a logical structural diagram of an apparatus for starting a service process, applied to a terminal device, according to some embodiments of the present specification; and
FIG. 7 is a logical structural diagram of an apparatus for starting a service process, applied to a server, according to some embodiments of the present specification.

### DETAILED DESCRIPTION

The embodiments of the present specification provide a novel method for starting a service process, by which a terminal device scans a barcode to obtain first function information of the barcode, a server receives the first function information uploaded by the terminal device, determines second function information according to the first function information and then returns service entry information corresponding to the second function information to the terminal device, and the terminal device starts a service process according to the received service entry information, the service process having a service function specified by the first function information, thereby using the barcode repeatedly for multiple service processes through the first function information without the need to deploy a respective barcode for each service process, reducing labor and material costs of applying barcodes in offline scenarios; in addition, a new service process for implementing a new service function can be rapidly started by adding first function information, second function information and corresponding service entry information for the new service function without the need to deploy a new barcode.

In the embodiments of the present specification, a terminal device and a server of a sender and a terminal device and a server of a receiver of an instant message may access each other via a network, where the terminal device (the terminal device of the sender and/or the receiver) may be a cell phone, a tablet computer, a Personal Computer (PC), a laptop computer, or other devices; the server may be one physical or logical server, or may include two or more physical or logical servers having different responsibilities of achieving various functions of the server in the embodiments of the present specification through collaboration. The types of the terminal device and the server, the types and protocols of a communication network between a terminal device and a server of the sender and between a terminal device and a server of the receiver, and the like are not limited by the embodiments of the present specification.

The embodiments of the present specification may be implemented on any device having computing and storage capabilities, such as a cell phone, a tablet computer, a PC, a laptop computer, a server and the like; moreover, various functions of the embodiments of the present specification may be achieved by logic nodes operating on two or more devices.

In the embodiments of the present specification, the terminal device and the server may access each other via a network, where the terminal device may be a cell phone, a tablet computer, a PC, a laptop computer, or other devices; the server may operate on one or more devices, such as PCs, and laptop computers, or, may include two or more logical servers operating separately and collaborating to achieve various functions of the server in the embodiments of the present specification. The types of the terminal devices and the devices where the server is located, the types and protocols of a communication network between terminal devices and servers, and the like are not limited by the embodiments of the present specification.

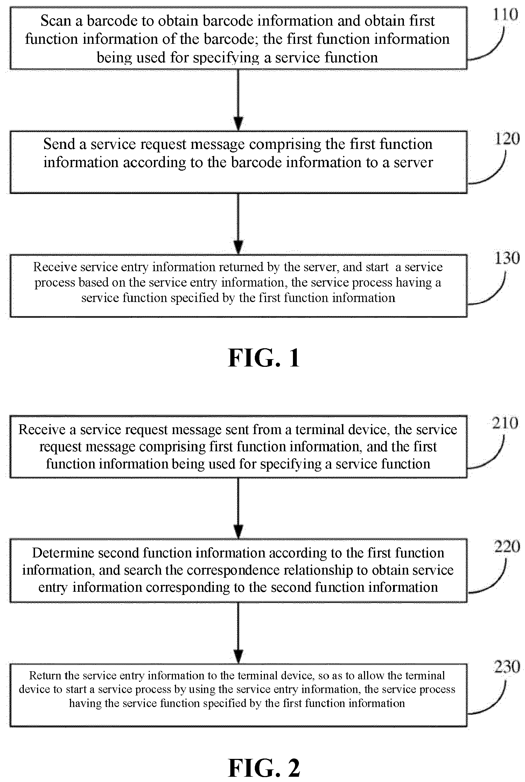

In the embodiments of the present specification, the flow of a method for starting a service process, applied to a terminal device, is as shown in FIG. 1, and the flow of a method for starting a service process, applied to a server, is as shown in FIG. 2.

At the terminal device, step 110, scan a barcode to obtain barcode information and obtain first function information of the barcode.

At the terminal device, step 120, send a business request message comprising the first function information to a server according to the barcode information.

At the server, step 210, receive the service request message sent from the terminal device.

At the server, step 220, determine second function information according to the first function information, and search a correspondence relationship between second function information and service entry information to obtain service entry information corresponding to the second function information.

In the embodiments of the present specification, the first function information and the second function information are used for specifying service functions. Any information with changeable content obtained by the terminal device when (e.g., including at the same time as, before, and after) scanning a barcode may be used to generate the first function information, and which service function is to be implemented by a service process to be started is specified through different contents of the first function information. For example, the first function information may be copywriting, terminal device attitude, fingerprint or voice input used to specify a service function, and different service functions may be specified through different copywriting contents, different attitudes, different fingerprints or different voice contents. The second function information is determined by the server according to the first function information. The second function information may be the first function information per se or may be data obtained after the server processes the first function information. The server maintains a correspondence relationship between the second function information and service entry information.

According to a user's service, the terminal device scans a barcode presented by a barcode provider and extract barcode information from image data of the barcode. The terminal device uses the barcode information to initiate a connection to the server and sends a service request message to the server. The service request message comprises the first function information and may further comprise other information carried by the terminal device when initiating an access to the server after scanning the barcode according to the current technologies. The server receives the service request message from the terminal device, determines second function information according to the first function information extracted from the service request message, and searches the maintained correspondence relationship to obtain service entry information corresponding to the second function information.

Here, an exemplary implementation manner in which the terminal device scans a barcode, extracts barcode information from image data of the barcode, and initiates an access to the server according to the barcode information may be achieved with reference to the current technologies, which will not be elaborated.

In the embodiments of the present specification, the barcode may be either a one-dimensional barcode or a two-dimensional barcode.

In some application scenarios, if a user makes incorrect services or something goes wrong when a server processes the first function message uploaded by a terminal device to obtain second function message, it is possible that the server is unable to find the second function message in the maintained correspondence relationship. Default service entry information may be set for this type of situations. When the correspondence relationship does not comprise second function information determined according to the first function information, the server returns the default service entry information to the terminal device. Upon receiving the default service entry information, the terminal device uses the default service entry information to start a default service process. The default service process may or may not be a service process having the service function specified by the first function message.

With regard to some service performed between barcode providers and users using terminal devices, for the same first function message, different barcode providers may start different service processes to achieve different functions, thereby achieving personalized service with respect to the barcode providers. In this circumstance, a correspondence relationship among barcode provider identifiers, second function information and service entry information is maintained at a server; a terminal device extracts a barcode provider identifier from the barcode information, packages the first function information and the barcode provider identifier in a service request message, and sends the service request message to the server; after determining second function information according to the first function information, the server searches the maintained correspondence relationship to obtain service entry information corresponding to the barcode provider identifier and the second function information. In some application scenarios, a barcode provider may set its own correspondence relationship among the barcode provider identifier, second function information and service entry information at a server, so as to independently determine and manage its own service process.

Formats of the first function information and the second function information and manners in which the terminal device obtains the first function information may be determined according to factors such as requirements of exemplary application scenarios, features of the service, and the like, which are not limited by the embodiments of the present specification. Examples will be provided below for illustration.

First example: a barcode provider displays a barcode having copywriting, a terminal device scans a copywriting image as well as the barcode. Different copywriting text correspond to different service functions. A correspondence relationship between copywriting text and service entry information is maintained at a server.

For example, in one implementation manner of the first example, the terminal device scans the barcode to obtain barcode information and a copywriting image of the barcode, uses the copywriting image as the first function information, and uploads the first function information to the server in a service request message. The server recognizes the copywriting image uploaded by the terminal device to obtain the copywriting text (the second function information), and further searches the correspondence relationship to obtain service entry information corresponding to the copywriting text.

In another implementation manner of the first example, the terminal device scans the barcode to obtain barcode information and a copywriting image of the barcode, uses the copywriting text obtained by recognizing the copywriting image as the first function information, and uploads the first function information to the server in a service request message. The server uses the copywriting text received from the terminal device as the second function information, and searches the correspondence relationship to obtain service entry information corresponding to the copywriting text.

Second example: different attitudes of a terminal device when scanning a barcode are used to start different service processes to achieve different functions. A correspondence relationship between attitude information and service entry information is maintained at a server.

For example, the terminal device scans the barcode to obtain barcode information, collects output data from a gyroscope of the terminal device when scanning the barcode, uses the gyroscope's output data to determine attitude information of the terminal device when scanning the barcode, uses the attitude information as the first function information, and uploads the first function information to the server in a service request message. The server uses the attitude information received from the terminal device as the second function information, and searches the correspondence relationship to obtain service entry information corresponding to the attitude information.

Third example: a terminal device prompts a user to input a fingerprint when scanning a barcode or prompts the user to input a fingerprint after scanning the barcode, and fingerprints of different fingers correspond to different service functions. A correspondence relationship between fingerprint identifiers and service entry information is maintained at a server.

For example, in one implementation manner of the third example, the terminal device scans the barcode to obtain barcode information, receives a fingerprint input by the user and generates fingerprint data, uses the fingerprint data as the first function information, and uploads the first function information to the server. The server recognizes the fingerprint data uploaded by the terminal device to obtain a fingerprint identifier (the second function information) corresponding to the fingerprint data, and searches the correspondence relationship to obtain service entry information corresponding to the fingerprint identifier.

In another implementation manner of the third example, the terminal device scans the barcode to obtain barcode information and receives a fingerprint input by the user. The terminal device recognizes the input fingerprint to obtain a fingerprint identifier of the input fingerprint, uses the fingerprint identifier as the first function information, and uploads the first function information to the server in a service request message. The server uses the fingerprint identifier received from the terminal device as the second function information, and searches the correspondence relationship to obtain service entry information corresponding to the fingerprint identifier.

Fourth example: a terminal device prompts a user to use voice to speak out a service function to be used while or before scanning a barcode. The user may start, using the speech, a service process that achieves the function. A correspondence relationship between function keywords and service entry information is maintained at a server.

For example, in one implementation manner of the fourth example, the terminal device scans the barcode to obtain barcode information, receives a speech input by the user and generates audio data, uses the audio data as the first function information, and uploads the first function information to the server. The server recognizes the audio data uploaded by the terminal device to obtain text of speech, determines a function keyword (the second function information) expressed by the audio data according to a recognition result, and searches the correspondence relationship to obtain service entry information corresponding to the function keyword.

In another implementation manner of the fourth example, the terminal device scans the barcode to obtain barcode information, receives a speech input by the user, recognizes the input speech of the user to obtain text of speech, uses the text of speech as the first function information, and uploads the first function information to the server. The server determines a function keyword (the second function information) expressed by the text of speech uploaded by the terminal device, and searches the correspondence relationship to obtain service entry information corresponding to the function keyword.

In the above-described two implementation manners of the fourth example, the server may use various existing semantic analysis technologies to analyze the text of speech and obtain a function keyword, which is not limited.

At the server, step 230, return the service entry information to the terminal device.

At the terminal device, step 130, receive the service entry information returned by the server, and start a service process based on the service entry information, where the service process has a service function specified by the first function information.

The server returns the service entry information corresponding to the second function information to the terminal device, and the terminal device starts the service process for achieving the service function specified by the first function information by using the returned service entry information.

In the embodiments of the present specification, the service entry information is various information required by the terminal device when starting a service process, and may be determined according to factors such as working modes between a terminal device and a server, operating manners of the service, and the like, in exemplary application scenarios, which is not limited.

For example, the service entry information may be a page address of a service process start page accessible through a network, and the terminal device starts a particular service process when accessing this start page; and different pages are accessed when different service processes are to be started. In another example, the service entry information may also be revoke information of a service entry program, and the terminal device starts a particular service process when using the revoke information to start the execution of the service entry program; and different service entry programs (e.g., different Apps installed on the terminal device) may be executed by different service processes, or different revoke information may be used to execute the same service entry program.

Therefore, in the embodiments of the present specification, after scanning the barcode and obtaining the first function information of the barcode, the terminal device uploads the first function information to the server, the server determines second function information according to the first function information and returns service entry information corresponding to the second function information to the terminal device; the terminal device starts a service process by using the service entry information, where the service process has a specified service function. According to the embodiments of the present specification, the same barcode can be used to start two or more service processes, and there is no need to deploy a respective barcode for each service process, thereby reducing material and labor costs required by barcode deployment.

Particular embodiments of the present specification are described above, and other embodiments fall within the scope of the appended claims. In some situations, actions or steps set forth in the claims may be executed in an order different from those in the embodiments and can still achieve desired results. In addition, processes depicted in the accompanying drawings may not necessarily require the illustrated particular order or a continuous order to achieve desired results. In some implementation manners, multi-task processing and parallel processing are also feasible or may be beneficial.

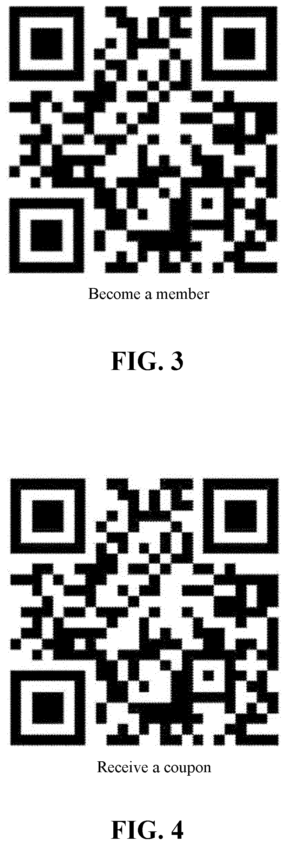

In the first application example of the present specification, in the correspondence relationship between second function information and service entry information maintained at the server, a merchant configures "Become a member" to correspond to a program entry address for downloading and installing an App of the merchant and performing user registration, and configures the service entry information to be default service entry information. The merchant provides the QR code and copywriting of "Become a member" as shown in FIG. 3 for users' terminal devices to scan.

When the merchant holds a temporary promotion event, in the correspondence relationship between second function information and service entry information maintained at the server, the merchant configures "Receive a coupon" to correspond to a program entry address for receiving this merchant's coupon in an App of a third-party payment platform, and changes the copywriting in the QR code shown in FIG. 3 to "Receive a coupon." The QR code with the changed copywriting to be presented to users is shown in FIG. 4. After the promotion event ends, the merchant changes the copywriting in the QR code back to that shown in FIG. 3.

While scanning a QR code, a user's terminal device also takes an image of the copywriting associated with the QR code. The terminal device obtains a server address and a merchant identifier from the QR code information, and sends a service request message including the copywriting image and the merchant identifier to the server. Upon receiving the service request message, the server recognizes the copywriting text in the copywriting image and searches the correspondence relationship for service entry information corresponding to the copywriting text. If the service entry information is found, the server returns the corresponding service entry information to the terminal device, and the terminal device starts the running of a corresponding program using the returned service entry information. When the QR code shown in FIG. 3 is scanned, the merchant's App is downloaded and installed, and user registration is performed. When the QR code shown in FIG. 4 is scanned, this merchant's coupon is received in an App of a third-party payment platform on the terminal device. If the server does not find the recognized copywriting text in the correspondence relationship, the server returns the default service entry information to the terminal device, and the terminal device runs the service process of downloading and installing the App of the merchant and performing user registration.

In this way, the merchant does not need to make and place new QR code materials for a temporary promotion event, and the original QR code can be used to start a new service process by revising the copywriting of the QR code.

In the second application example of the present specification, in an App having instant communication and payment functions, each user has the user's own QR code at a client. In the correspondence relationship between second function information and service entry information, the server of the App configures "vertical" to correspond to an address of an adding contact page of this App and "horizontal" to correspond to a payment page address of this App.

User A of this App displays User A's own QR code on a tablet computer for User B's cell phone to scan. While scanning the QR code, this App's client on User B's cell phone extracts output data of a gyroscope on the cell phone, and determines whether the attitude of the cell phone is horizontal (the cell phone's screen is parallel to the floor) or vertical (the cell phone's screen is perpendicular to the floor) while scanning the QR code. The App client of User B sends the attitude information ("horizontal" or "vertical") and User A's identifier to the server in a service request message. The server searches the correspondence relationship for a page address corresponding to the attitude information of User B's cell phone, and returns the corresponding page address and User A's information to User B's client, such that User B's client starts a corresponding service process.

In this way, the same QR code of User A can be used, through the cell phone's attitude while scanning the QR code, to start service processes for achieving different functions without the need to compile codes for generating and presenting a second QR code for a second service process and to update the client software.

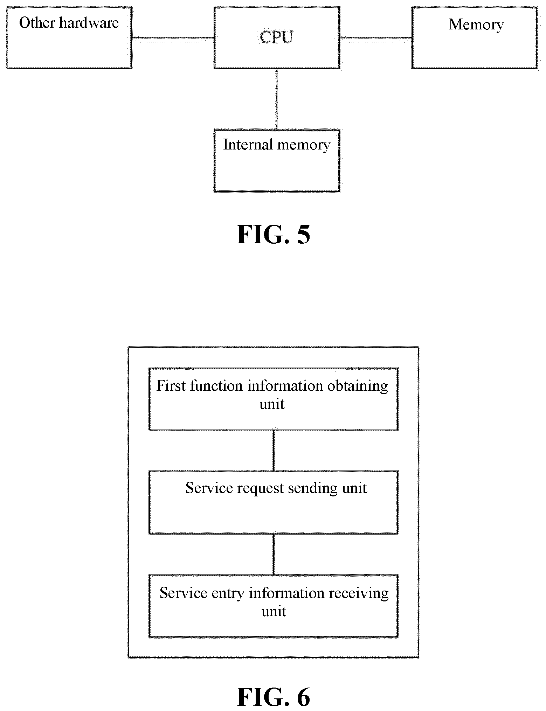

Corresponding to the above-described flows of the methods, the embodiments of the present specification further provide an apparatus for starting a service process, applied to a terminal device, and an apparatus for starting a service process, applied to a server. These two apparatus can both be implemented through software, or may also be implemented through hardware or a combination of software and hardware. Taking software implementation as an example, an apparatus in the logical sense is formed by a Central Process Unit (CPU) of a device where the terminal device or server is located reading a corresponding computer program instruction into a memory for running. From a hardware perspective, in addition to the CPU, memory and storage shown in FIG. 5, the terminal device where the apparatus for starting a service process is located typically also comprises other hardware, such as a chip for receiving and transmitting wireless signals, and the device where the apparatus for starting a service process applied to a server is located typically also comprises other hardware, such as a board or card for achieving network communication functions.

FIG. 6 illustrates an apparatus for starting a service process, applied to a terminal device, according to some embodiments of the present specification. The apparatus comprises: a first function information obtaining unit, a service request sending unit, and a service entry information receiving unit, where the first function information obtaining unit is configured to scan a barcode to obtain barcode information and obtain first function information of the barcode, the first function information being used for specifying a service function; the service request sending unit is configured to send, according to the barcode information, a service request message comprising the first function information to a server, for the server to determine second function information according to the first function information and determine service entry information according to a correspondence relationship between the second function information and the service entry information; and the service entry information receiving unit is configured to receive the service entry information returned by the server, and start a service process by using the service entry information, the service process having the service function specified by the first function information.

Optionally, the barcode information comprises: a barcode provider identifier; the service request message further comprises: a barcode provider identifier; and the server determining service entry information according to a correspondence relationship between the second function information and the service entry information comprises: the server determining service entry information according to a correspondence relationship among the barcode provider identifiers, the second function information and the service entry information.

Optionally, the first function information obtaining unit is configured to, for example, scan a barcode to obtain barcode information and a copywriting image of the barcode and use the copywriting image as the first function information; alternatively, scan a barcode to obtain barcode information and a copywriting image of the barcode and use copywriting text obtained by recognizing the copywriting image as the first function information.

Optionally, the first function information comprises: attitude information of the terminal device; the first function information obtaining unit is configured to, for example, scan a barcode to obtain barcode information, and use output data of a gyroscope of the terminal device to determine attitude information of the terminal device when scanning the barcode.

Optionally, the first function information obtaining unit is configured to, for example, scan a barcode to obtain barcode information, receive a fingerprint input by a user and generate fingerprint data, and use the fingerprint data as the first function information; alternatively, scan a barcode to obtain barcode information, receive a fingerprint input by a user, recognize the input fingerprint to obtain a corresponding fingerprint identifier, and use the fingerprint identifier as the first function information.

Optionally, the first function information obtaining unit is configured to, for example, scan a barcode to obtain barcode information, receive a speech input by a user and generate audio data, and use the audio data as the first function information; alternatively, scan a barcode to obtain barcode information, receive a speech input by a user, recognize the input speech to obtain a text of speech, and use the text of speech as the first function information.

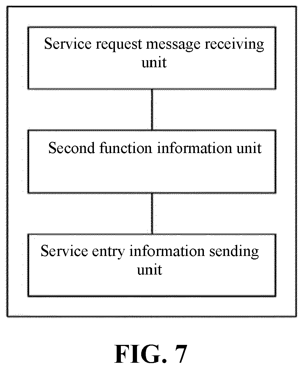

FIG. 7 illustrates an apparatus for starting a service process, applied to a server, according to some embodiments of the present specification, where the server maintains a correspondence relationship between second function information and service entry information, and the apparatus comprises a service request message receiving unit, a second function information unit, and a service entry information sending unit, where the service request message receiving unit is configured to receive a service request message comprising first function information sent from a terminal device, the first function information being used for specifying a service function; the second function information unit is configured to determine second function information according to the first function information, and search the correspondence relationship to obtain service entry information corresponding to the second function information; and the service entry information sending unit is configured to return the service entry information to the terminal device, for the terminal device to start a service process by using the service entry information, the service process having the service function specified by the first function information.

Optionally, the correspondence relationship between second function information and service entry information comprises: a correspondence relationship among barcode provider identifiers, second function information and service entry information; the service request message further comprises: a barcode provider identifier; and the second function information unit is configured to, for example, determine second function information according to the first function information, and search the correspondence relationship to obtain service entry information corresponding to the barcode provider identifier and the second function information.

Optionally, the first function information comprises: a copywriting image; the second function information comprises: copywriting text; and the second function information unit determining second function information according to the first function information comprises: recognizing the copywriting image to obtain the copywriting text; alternatively, the first function information and the second function information comprise: copywriting text; and the second function information unit determining second function information according to the first function information comprises: using the copywriting text received from the terminal device as the second function information.

Optionally, the first function information and the second function information comprise: attitude information of the terminal device; and the second function information unit determining second function information according to the first function information comprises: using the attitude information received from the terminal device as the second function information.

Optionally, the first function information comprises: fingerprint data; the second function information comprises: a fingerprint identifier; and the second function information unit determining second function information according to the first function information comprises: recognizing the fingerprint data to obtain a corresponding fingerprint identifier; alternatively, the first function information and the second function information comprise: a fingerprint identifier; and the second function information unit determining second function information according to the first function information comprises: using the fingerprint identifier received from the terminal device as the second function information.

Optionally, the first function information comprises: audio data; the second function information comprises: a function keyword; and the second function information unit determining second function information according to the first function information comprises: recognizing the audio data and determining the function keyword expressed by the audio data according to a recognition result; alternatively, the first function information comprises: text of speech; the second function information comprises: a function keyword; and the second function information unit determining second function information according to the first function information comprises: determining the function keyword expressed by the text of speech.

Optionally, the apparatus further comprises a default service entry information unit configured to return default service entry information to the terminal device when the correspondence relationship does not comprise second function information determined according to the first function information.

The embodiments of the present specification provide a terminal device, comprising a memory and a processor, where the memory stores computer programs executable by the processor, and when executing the computer programs, the processor implements the steps of the method for starting a service process, applied to a terminal device, according to the embodiments of the present specification. The above description may be referenced for detailed description of the steps of the method for starting a service process, applied to a terminal device, which will not be repeated.

The embodiments of the present specification provide a computer device, comprising: a memory and a processor, where the memory stores computer programs executable by the processor, and when executing the computer programs, the processor implements the steps of the method for starting a service process, applied to a server, according to the embodiments of the present specification. The above description may be referenced for detailed description of the steps of the method for starting a service process, applied to a server, which will not be repeated.

The embodiments of the present specification provide a computer readable storage medium, which stores computer programs, and the computer programs, when executed by a processor, implement the steps of the method for starting a service process, applied to a terminal device, according to the embodiments of the present specification. The above description may be referenced for detailed description of the steps of the method for starting a service process, applied to a terminal device, which will not be repeated.

The embodiments of the present specification provide a computer readable storage medium, which stores computer programs, and the computer programs, when executed by a processor, implement the steps of the method for starting a service process, applied to a server, according to the embodiments of the present specification. The above description may be referenced for detailed description of the steps of the method for starting a service process, applied to a server, which will not be repeated.

The above-described is only preferred embodiments of the present application, which are not used to limit the present application. Any modification, equivalent substitution, or improvement made within the spirit and principle of the present application shall be encompassed by the protection scope of the present application.

In a typical configuration, a computation device includes one or more processors (CPUs), input/output interfaces, network interfaces, and a memory.

The memory may include computer readable media, such as a volatile memory, a Random Access Memory (RAM), and/or a non-volatile memory, e.g., a Read-Only Memory (ROM) or a flash RAM. The memory is an example of a computer readable medium.

Computer readable media include non-volatile and volatile, movable and non-movable media, which can implement information storage through any method or technology. The information may be computer readable instructions, data structures, program modules, or other data. Examples of storage media of computers include, but are not limited to, Phase-change Random Access Memories (PRAMs), Static Random Access Memories (SRAMs), Dynamic Random Access Memories (DRAMs), other types of Random Access Memories (RAMs), Read-Only Memories (ROMs), Electrically Erasable Programmable Read-Only Memories (EEPROMs), flash memories or other memory technologies, Compact Disk Read-Only Memories (CD-ROMs), Digital Versatile Discs (DVDs) or other optical memories, cassette tapes, cassette and disk memories or other magnetic memory devices, or any other non-transmission media, which can be used for storing information accessible to a computation device. According to the definitions in the specification, the computer readable media do not include transitory media, such as modulated data signals and carriers.

It should be further noted that the terms of "including," "comprising" or any other variants of the terms are intended to encompass a non-exclusive inclusion, causing a process, method, commodity, or device comprising a series of elements to not only comprise these elements, but also comprise other elements that are not explicitly listed, or further comprise elements that are inherent to the process, method, commodity, or device. When there is no further restriction, elements described by the statement "comprising one..." does not exclude that a process, method, commodity, or device comprising the above elements further comprises additional identical elements.

One of ordinary skill in the art should understand that the embodiments of the present specification may be provided as a method, a system, or a computer program product. Therefore, the embodiments of the present specification may be implemented as a complete hardware embodiment, a complete software embodiment, or an embodiment combing software and hardware. Moreover, the embodiments of the present specification may be in the form of a computer program product implemented on one or more computer usable storage media (including, but not limited to, a magnetic disk memory, CD-ROM, an optical memory, etc.) comprising computer usable program codes.

## Claims

1. A method for starting a service process, applied by a terminal device, comprising:
scanning a barcode to obtain barcode information and obtain first function information of the barcode, the first function information being used for specifying a service function;
sending, according to the barcode information, a service request message comprising the first function information to a server, for the server to determine second function information according to the first function information and determine service entry information according to a correspondence relationship between the second function information and the service entry information; and
receiving the service entry information returned by the server, and starting a service process by using the service entry information, the service process having the service function specified by the first function information.

2. The method according to claim 1, wherein the barcode information comprises: a barcode provider identifier; the service request message further comprises: the barcode provider identifier; and
the server determining service entry information according to a correspondence relationship between the second function information and the service entry information comprises: the server determining the service entry information according to a correspondence relationship among the barcode provider identifiers, the second function information and the service entry information.

3. The method according to claim 1, wherein the scanning a barcode to obtain barcode information and obtain first function information of the barcode comprises:
scanning the barcode to obtain the barcode information and a copywriting image of the barcode, and using the copywriting image as the first function information; or,
scanning the barcode to obtain the barcode information and a copywriting image of the barcode, and using copywriting text obtained by recognizing the copywriting image as the first function information.

4. The method according to claim 1, wherein the first function information comprises: attitude information of the terminal device; and
the scanning a barcode to obtain barcode information and obtain first function information of the barcode comprises: scanning the barcode to obtain the barcode information, and using output data of a gyroscope of the terminal device to determine the attitude information of the terminal device when scanning the barcode.

5. The method according to claim 1, wherein the scanning a barcode to obtain barcode information and obtain first function information of the barcode comprises:
scanning the barcode to obtain the barcode information, receiving a fingerprint input by a user and generating fingerprint data, and using the fingerprint data as the first function information; or,
scanning the barcode to obtain the barcode information, receiving a fingerprint input by a user, recognizing the input fingerprint to obtain a corresponding fingerprint identifier, and using the fingerprint identifier as the first function information.

6. The method according to claim 1, wherein the scanning a barcode to obtain barcode information and obtain first function information of the barcode comprises:
scanning the barcode to obtain the barcode information, receiving a speech input by a user and generating audio data, and using the audio data as the first function information; or,
scanning the barcode to obtain the barcode information, receiving a speech input by a user, recognizing the input speech to obtain text of speech, and using the text of speech as the first function information.

7. A method for starting a service process, applied to a server, wherein the server maintains a correspondence relationship between second function information and service entry information, and the method comprises:
receiving a service request message comprising first function information sent from a terminal device, the first function information being used for specifying a service function;
determining second function information according to the first function information, and searching the correspondence relationship to obtain service entry information corresponding to the second function information; and
returning the service entry information to the terminal device, for the terminal device to start a service process by using the service entry information, the service process having the service function specified by the first function information.

8. The method according to claim 7, wherein the correspondence relationship between second function information and service entry information comprises: a correspondence relationship among barcode provider identifiers, second function information and service entry information;
the service request message further comprises: a barcode provider identifier; and
the determining second function information according to the first function information, and searching the correspondence relationship to obtain service entry information corresponding to the second function information comprises: determining the second function information according to the first function information, and searching the correspondence relationship to obtain service entry information corresponding to the barcode provider identifier and the second function information.

9. The method according to claim 7, wherein the first function information comprises: a copywriting image; the second function information comprises: copywriting text; and the determining second function information according to the first function information comprises: recognizing the copywriting image to obtain the copywriting text; or,
the first function information and the second function information comprise: copywriting text; and the determining second function information according to the first function information comprises: using the copywriting text received from the terminal device as the second function information.

10. The method according to claim 7, wherein the first function information and the second function information comprise: attitude information of the terminal device; and the determining second function information according to the first function information comprises: using the attitude information received from the terminal device as the second function information.

11. The method according to claim 7, wherein the first function information comprises: fingerprint data; the second function information comprises: a fingerprint identifier; and the determining second function information according to the first function information comprises: recognizing the fingerprint data to obtain a corresponding fingerprint identifier; or,
the first function information and the second function information comprise: a fingerprint identifier; and the determining second function information according to the first function information comprises: using the fingerprint identifier received from the terminal device as the second function information.

12. The method according to claim 7, wherein the first function information comprises: audio data; the second function information comprises: a function keyword; and the determining second function information according to the first function information comprises: recognizing the audio data and determining the function keyword expressed by the audio data according to a recognition result; or,
the first function information comprises: text of speech; the second function information comprises: a function keyword; and the determining second function information according to the first function information comprises: determining the function keyword expressed by the text of speech.

13. The method according to claim 7, further comprising: returning default service entry information to the terminal device when the correspondence relationship does not comprise the second function information determined according to the first function information.

14. An apparatus for starting a service process, applied to a terminal device, the apparatus comprising:
a first function information obtaining unit configured to scan a barcode to obtain barcode information and obtain first function information of the barcode, the first function information being used for specifying a service function;
a service request sending unit configured to send, according to the barcode information, a service request message comprising the first function information to a server, for the server to determine second function information according to the first function information and determine service entry information according to a correspondence relationship between the second function information and the service entry information; and
a service entry information receiving unit configured to receive the service entry information returned by the server, and start a service process by using the service entry information, the service process having the service function specified by the first function information.

15. The apparatus according to claim 14, wherein the barcode information comprises: a barcode provider identifier; the service request message further comprises: a barcode provider identifier; and
the server determining service entry information according to a correspondence relationship between the second function information and the service entry information comprises: the server determining the service entry information according to a correspondence relationship among the barcode provider identifiers, the second function information and the service entry information.

16. The apparatus according to claim 14, wherein the first function information obtaining unit is configured to:
scan the barcode to obtain the barcode information and a copywriting image of the barcode and use the copywriting image as the first function information; or,
scan the barcode to obtain the barcode information and a copywriting image of the barcode and use copywriting text obtained by recognizing the copywriting image as the first function information.

17. The apparatus according to claim 14, wherein the first function information comprises: attitude information of the terminal device;
the first function information obtaining unit is configured to scan the barcode to obtain barcode information, and use output data of a gyroscope of the terminal device to determine the attitude information of the terminal device when scanning the barcode.

18. The apparatus according to claim 14, wherein the first function information obtaining unit is configured to:
scan the barcode to obtain the barcode information, receive a fingerprint input by a user and generate fingerprint data, and use the fingerprint data as the first function information; or,
scan the barcode to obtain the barcode information, receive a fingerprint input by a user, recognize the input fingerprint to obtain a corresponding fingerprint identifier, and use the fingerprint identifier as the first function information.

19. The apparatus according to claim 14, wherein the first function information obtaining unit is configured to:
scan the barcode to obtain the barcode information, receive a speech input by a user and generate audio data, and use the audio data as the first function information; or,
scan the barcode to obtain the barcode information, receive a speech input by a user, recognize the input speech to obtain text of speech, and use the text of speech as the first function information.

20. An apparatus for starting a service process, applied to a server, wherein the server maintains a correspondence relationship between second function information and service entry information, and the apparatus comprises:
a service request message receiving unit configured to receive a service request message comprising first function information sent from a terminal device, the first function information being used for specifying a service function;
a second function information unit configured to determine second function information according to the first function information, and search the correspondence relationship to obtain service entry information corresponding to the second function information; and
a service entry information sending unit configured to return the service entry information to the terminal device, for the terminal device to start a service process by using the service entry information, the service process having the service function specified by the first function information.

21. The apparatus according to claim 20, wherein the correspondence relationship between second function information and service entry information comprises: a correspondence relationship among barcode provider identifiers, second function information and service entry information;
the service request message further comprises: a barcode provider identifier; and
the second function information unit is configured to determine the second function information according to the first function information, and search the correspondence relationship to obtain service entry information corresponding to the barcode provider identifier and the second function information.

22. The apparatus according to claim 20, wherein the first function information comprises: a copywriting image; the second function information comprises: copywriting text; and the second function information unit determining second function information according to the first function information comprises: recognizing the copywriting image to obtain the copywriting text; or,
the first function information and the second function information comprise: copywriting text; and the second function information unit determining second function information according to the first function information comprises: using the copywriting text received from the terminal device as the second function information.

23. The apparatus according to claim 20, wherein the first function information and the second function information comprise: attitude information of the terminal device; and the second function information unit determining second function information according to the first function information comprises: using the attitude information received from the terminal device as the second function information.

24. The apparatus according to claim 20, wherein the first function information comprises: fingerprint data; the second function information comprises: a fingerprint identifier; and the second function information unit determining second function information according to the first function information comprises: recognizing the fingerprint data to obtain a corresponding fingerprint identifier; or,
the first function information and the second function information comprise: a fingerprint identifier; and the second function information unit determining second function information according to the first function information comprises: using the fingerprint identifier received from the terminal device as the second function information.

25. The apparatus according to claim 20, wherein the first function information comprises: audio data; the second function information comprises: a function keyword; and the second function information unit determining second function information according to the first function information comprises: recognizing the audio data and determining the function keyword expressed by the audio data according to a recognition result; or,
the first function information comprises: text of speech; the second function information comprises: a function keyword; and the second function information unit determining second function information according to the first function information comprises: determining the function keyword expressed by the text of speech.

26. The apparatus according to claim 20, further comprising a default service entry information unit configured to return default service entry information to the terminal device when the correspondence relationship does not comprise the second function information determined according to the first function information.

27. A terminal device, comprising: a memory and a processor, wherein the memory stores a computer program executable by the processor, and when executing the computer program, the processor implements the steps of any one of claims 1-6.

28. A computer device, comprising: a memory and a processor, wherein the memory stores a computer program executable by the processor, and when executing the computer program, the processor implements the steps of any one of claims 7-13.

29. A computer readable storage medium storing a computer program, wherein the computer program, when executed by a processor, implements the steps of any one of claims 1-6.

30. A computer readable storage medium storing a computer program, wherein the computer program, when executed by a processor, implements the steps of any one of claims 7-13.
